Europäisches Patentamt

European Patent Office

Office européen des brevets

(11) Numéro de publication : **0 466 526 A1**

# DEMANDE DE BREVET EUROPEEN

(21) Numéro de dépôt : **91401280.2**

(22) Date de dépôt : **17.05.91**

(51) Int. Cl.⁵ : **C08J 9/30,** E01C 19/17, E01C 7/18, E01C 19/45

(30) Priorité : **29.06.90 FR 9008237**

(43) Date de publication de la demande : **15.01.92 Bulletin 92/03**

(84) Etats contractants désignés : **AT BE CH DE DK ES FR GB GR IT LI LU NL SE**

(71) Demandeur : **BEUGNET S.A. 57, Grand Place F-62001 Arras (Pas de Calais) (FR)**

(72) Inventeur : **Sainton, Alain 9 rue des Alouettes Abbeville la Rivière Etampes (Essonne) (FR)** Inventeur : **Bourdrel,Didier Rue de la Gare Mont Saint Eloi (Pas de Calais) (FR)**

(74) Mandataire : **Cabinet Pierre HERRBURGER 115, Boulevard Haussmann F-75008 Paris (FR)**

(54) **Liant bitumineux pour revêtement de chaussées ainsi que procédé pour la fabrication d'un tel liant.**

(57)  a) Liant bitumineux pour revêtement de chaussées ainsi que procédé pour la fabrication d'un tel liant,
   b) le liant est caractérisé en ce qu'il est constitué par une émulsion de bitume expansée à l'air et le procédé est caractérisé en ce que l'on expanse une émulsion de bitume chauffée dans un dispositif de foisonnement en y insérant mécaniquement de l'air sous pression.

EP 0 466 526 A1

FIG.3

La présente invention a pour objet un liant bitumineux pour revêtements de chaussées, notamment pour la fabrication d'enduits superficiels ou d'enrobés destinés à former les couches de base ou la couche de roulement d'une chaussée.

L'enduit superficiel constitue la technique de revêtement des chaussées la plus ancienne et la plus pratique. Cette technique, qui présente l'avantage tout particulier d'être économique en produits pétroliers connaît depuis une dizaine d'années une forte expansion et représente en France plus de 100 000 000 m² traités annuellement.

Cette technique consiste à répandre uniformément, sur un support préalablement préparé, un film très mince de liant bitumineux d'épaisseur de l'ordre de 1 à 2 mm, à répartir sur ce film une couche de gravillons sur une épaisseur moyenne de 6 à 10 mm, et à compacter la chaussée ainsi traitée pour parfaire la mise en place et le collage des granulats.

Outre le fait de permettre le collage des granulats, le film de liant bitumineux a pour rôle d'assurer l'étanchéité du revêtement ; les granulats permettent d'améliorer quant à eux la résistance à l'usure et la rugosité de celui-ci, et par suite, d'assurer la sécurité des usagers.

Pour garantir cette sécurité, il est nécessaire que les granulats soient fixés au liant bitumineux de façon sûre et durable : en effet, une adhérence insuffisante peut avoir des conséquences graves, en particulier consécutives au risque de bris de pare-brise entraînés par les granulats de rejet.

Or, cette adhérence dépend de plusieurs paramètres parmi lesquels on peut mentionner l'adhésivité active, c'est-à-dire l'aptitude du liant au mouillage des granulats, l'adhésivité passive, c'est-à-dire l'aptitude du liant vis-à-vis des granulats à résister au désenrobage sous l'action de l'eau ou d'autres éléments, ou encore la cohésivité du liant, c'est-à-dire sa résistance à la rupture dans sa masse.

Ces paramètres dépendent de la viscosité du liant mis en oeuvre de façon contradictoire : en effet, pour obtenir un mouillage efficace des granulats, il convient d'augmenter au maximum la surface de contact granulats/liants et donc d'utiliser un liant ayant une viscosité relativement faible ; au contraire, un liant doit avoir une viscosité relativement élevé pour que sa cohésion soit satisfaisante et appropriée au trafic.

Lors de la mise en oeuvre d'enduits superficiels, il est donc nécessaire de trouver un compromis entre les obligations susmentionnées.

D'une manière plus précise, il existe schématiquement deux techniques de mise en oeuvre d'enduits superficiels, à savoir une technique dans laquelle le liant est mis en oeuvre à chaud, c'est-à-dire à une température supérieure à 140°C et une technique dans laquelle il est mis en oeuvre à froid, c'est-à-dire à une température de l'ordre de 70 à 80°C.

La technique dite "à chaud" pose de nombreux problèmes de sécurité pour le personnel chargé de sa mise en oeuvre : en effet, cette technique exige une opération de pompage sous pression occasionnant des risques de bouchon dans les tuyauteries et donc d'éclatement, ce qui représente un danger considérable en présence de bitume à une température supérieure à 140°C. De plus, il est nécessaire d'ajouter au bitume des réducteurs de viscosité à caractère polaire généralement constitués par des huiles fluidifiantes (aromatiques ou naphténoaromatiques) qui ont tendance à distiller à partir de températures de l'ordre de 120°C, entraînant des nuisances pour le personnel et l'environnement lors des opérations de stockage, de manutention et surtout de mise en oeuvre. Un autre inconvénient de cette technique dite "à chaud" est lié au fait que le coût du stockage est notablement augmenté par l'énergie nécessaire au maintien du liant à haute température.

La technique dite "à froid", mise en oeuvre à une température de l'ordre de 60 à 80°C permet de remédier aux inconvénients liés aux risques encourus par le personnel et au coût du stockage ; elle ne permet cependant pas de remédier aux problèmes consécutifs à l'obligation d'utiliser un liant ayant une viscosité suffisamment faible pour garantir un mouillage efficace des granulats.

Il convient de signaler qu'un mauvais mouillage se traduit en général par la présence, à l'interface liant-granulats, d'un ménisque dit négatif qui apporte la preuve que l'adhésion est insuffisante et donc que l'on risque d'assister à de nombreux décollements de gravillons.

Pour tenter de remédier aux inconvénients susmentionnés, on utilise depuis plusieurs années, pour la technique des enduits superficiels dits "à froid" des émulsions de bitume qui présentent l'avantage d'être suffisamment fluides pour garantir un bon mouillage des granulats, d'être particulièrement simples à utiliser et d'avoir une bonne tenue au stockage même à des températures très basses.

De telles émulsions sont constituées par une phase aqueuse continue constituée par de l'eau et un agent émulsifiant dans laquelle est dispersée une phase hydrocarbonée constituée par du bitume pur, fluidifié ou fluxé, voire même modifié, pour répondre aux exigences de la technique de mise en oeuvre, des contraintes du trafic et des données climatiques.

Depuis plusieurs dizaines d'années, on utilise de préférence des émulsions de type cationique qui présentent l'avantage d'avoir une affinité chimique avec tous les type d'agrégats et pas seulement avec les agrégats calcaires ce qui est le cas pour les solutions anioniques.

Dans les émulsions de ce type, l'émulsifiant le plus employé est un produit chimique de la classe des amines provenant de l'action d'un acide fort (HCl) sur une base faible (amine grasse de formule $R-NH_3$).

Les caractéristiques de telles émulsions dépendent, bien entendu, de différents paramètres tels que, par exemple, la nature et la quantité d'émulsifiant, le pH de la phase aqueuse, l'origine et la classe du bitume mis en oeuvre, ainsi que de l'installation utilisée pour homogénéiser le mélange, c'est-à-dire lui apporter l'énergie mécanique de dispersion nécessaire, et de la durée du stockage.

Les qualités d'une émulsion de bitume sont, par ailleurs, liées à sa vitesse de rupture, c'est-à-dire au temps que met l'émulsion pour faire prise avec la chaussée et les granulats, la rupture étant la séparation irréversible des phases aqueuse et hydrocarbonée.

Cette vitesse de rupture est déterminée par l'indice de rupture (Norme NF T 66-017) elle est d'autant plus grande que cet indice est faible. Une émulsion cationique est considérée comme étant à rupture rapide si son indice de rupture est inférieur à 100.

Dans le cas particulier des enduits superficiels obtenus à partir d'émulsions cationiques de bitume, il est avantageux d'utiliser des émulsions à rupture rapide dans lesquelles la rupture se produit pendant le compactage des granulats ; il est ainsi possible d'obtenir l'adhésivité le plus rapidement possible après la distribution des granulats.

En conclusion, lors de la mise en oeuvre d'émulsions de bitume, on cherche à obtenir, d'une part, immédiatement après la rupture, un liant suffisamment fluide pour faciliter l'étalage du film de bitume sur les granulats, et, à moyen terme, un liant assez rigide quine se rétracte pas et résiste bien aux sollicitations dynamiques engendrées par la circulation, de manière à assurer la cohésivité de l'ensemble.

L'expérience a, malheureusement, montré que les impératifs susmentionnés sont largement dépendants des conditions climatiques, et qu'il est en fait quasi impossible de les concilier tous ; dans la pratique, les émulsions de bitume présentent donc toujours deux inconvénients majeurs : d'une part, du fait de leur dépendance des conditions météorologiques, elles ne peuvent être utilisées que de Mai à Septembre et, d'autre part, leur fluidité fait qu'elles ont tendance à couler, d'où un risque de sous-dosage dans le cas de chaussées bombées.

La présente invention a pour objet de proposer un liant bitumineux de nature à remédier aux inconvénients des émulsions de bitume, tout en en gardant les avantages.

Selon l'invention, ce liant est caractérisé en ce qu'il est constitué par une émulsion de bitume expansée à l'air.

Cette expansion conduit à la fabrication d'une "crème de bitume" comparable à une crème Chantilly ou à une sauce Mayonnaise donc ayant une viscosité plus élevée que celle du produit de départ ; elle permet, en outre, d'obtenir un gonflement artificiel du volume du liant, et de l'épaisseur du film répandu sur la chaussée, et par suite un meilleur "enchâssement" des granulats dans celui-ci, et donc une meilleure cohésion de l'ensemble du revêtement.

Lors de l'étalement du liant sur le support de chaussée, il est bien entendu nécessaire de veiller à ce que l'épaisseur du film ainsi obtenu ne soit pas supérieure à l'épaisseur moyenne de la couche de granulats dispersée afin de garantir que ces granulats dépassent vers l'extérieur et permettent d'obtenir l'augmentation souhaitée de la résistance à l'usure et de la rugosité de la chaussée.

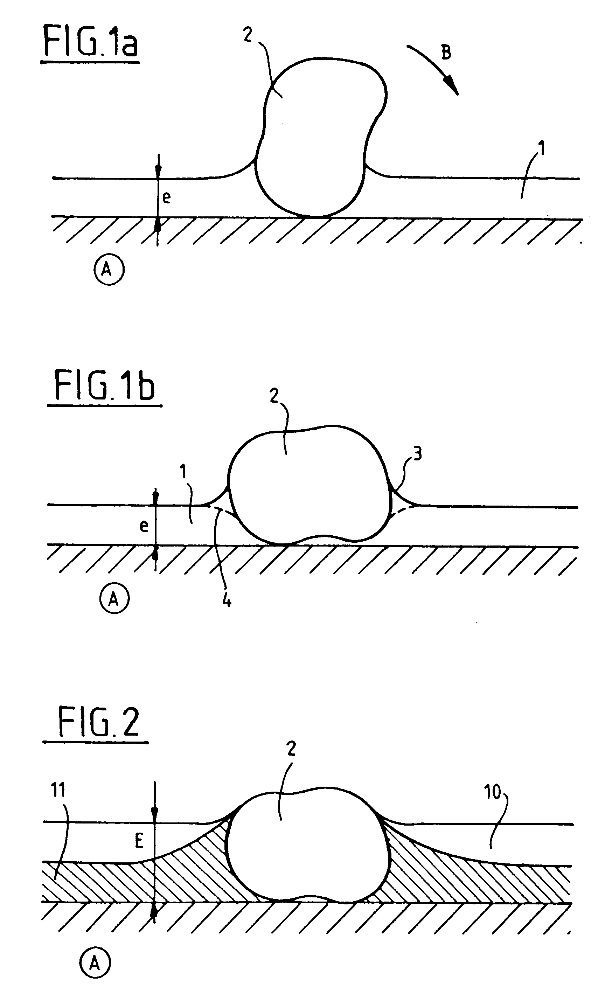

Les avantages du liant conforme à l'invention sont mis ci-dessous en lumière à partir des figures 1a, 1b et 2.

Selon la figure 1a, pour obtenir un revêtement de chaussée à partir d'une émulsion de bitume par la technique des revêtements de chaussées, on applique, sur un support A préalablement préparé et à une température de l'ordre de 60 à 80°C, un film 1 d'émulsion d'épaisseur $e$ de l'ordre de 1 à 2 mm, ce qui correspond, approximativement, à 1 à 2 kg de liant par $m^2$ ; on répartit ensuite sur ce film de liant des granulats 2 dont un seul est représenté sur la figure dans un but de clarté.

On fait ensuite passer sur l'ensemble ainsi obtenu une compacteuse de façon à positionner les granulats 2 comme représenté sur la figure 1b en les faisant basculer selon la flèche B, de manière à parfaire le collage granulats 2/film de liant 1. Pour que l'adhésivité soit maximum, il est nécessaire que l'interface liant/granulats corresponde à un ménisque positif 3 et non à un ménisque négatif 4 tel que représenté en pointillés sur la figure 1b.

Selon la figure 2, l'utilisation d'une émulsion de bitume expansée à l'air, permet de gonfler artificiellement le volume du film 1 et donc de le remplacer par un film 10 d'épaisseur E nettement supérieure à $e$. L'expérience a montré que le choix d'un taux d'expansion de 100 % était particulièrement avantageux pour obtenir un enchâssement optimal des granulats 2 dans le liant, tout en garantissant que ceux-ci dépassent vers l'extérieur de manière à ce qu'ils puissent jouer leur rôle.

Après la rupture du liant, on obtient, suite à l'élimination de la phase aqueuse, une couche 11 telle que représentée en hachuré dans laquelle les granulats 2 se trouvent ancrés très solidement et donc parfaitement maintenus.

L'expansion permet donc d'obtenir parallèlement une amélioration de l'aptitude du liant au mouillage grâce à la meilleure immersion des granulats, dans le liant de base et une amélioration de la cohésion du revêtement fini grâce au meilleur enchâssement des granulats après rupture de l'émulsion.

Il est essentiel, conformément à l'invention, que les avantages susmentionnés puissent être obtenus dans le cadre d'un travail à froid, c'est-à-dire à une température de l'ordre de 60 à 80°C, donc particulièrement satisfaisante tant du point de vue de la sécurité du personnel chargé de la mise en oeuvre que de celui du prix de revient.

Il convient de souligner que, si la crème de bitume conforme à l'invention a été primitivement mise au point dans le cadre de la technique des enduits superficiels, son domaine d'utilisation n'est nullement limité à une telle technique. Un tel liant peut en effet, par exemple, avantageusement être mis en oeuvre pour la fabrication d'enrobés destinés à former les couches de base ou la couche de roulement d'une chaussée : l'utilisation d'une telle crème de bitume permet d'obtenir, à partir d'une même quantité de liant dont le volume est artificiellement augmenté, un enrobage plus intime. L'expérience a permis de mettre en lumière qu'il était ainsi possible d'obtenir à froid, une qualité d'enrobage identique à celle normalement obtenue dans la technique d'enrobage à chaud et ce à partir d'une quantité de liant identique à celle utilisée classiquement dans la technique d'enrobage à chaud (donc nettement inférieure à la quantité correspondant classiquement à un enrobage à froid).

Un autre domaine d'utilisation du liant conforme à l'invention correspond au retraitement des chaussées à froid, et plus particulièrement au recyclage en place.

Conformément à l'invention, on a dans un premier temps cherché à expanser des émulsions de bitume ayant une forte viscosité qui aurait théoriquement dû faciliter l'expansion. Cependant, les résultats obtenus ainsi se sont montrés décevants, et, on s'est donc tourné vers l'utilisation d'émulsions de bitume classiques moins visqueuses.

Selon une caractéristique préférentielle de l'invention, l'émulsion de bitume présente une teneur en eau environ comprise entre 25 et 40 %, une viscosité à 25°C de l'ordre de 10 à 50, exprimée en degrés ENGLER, et un indice de rupture compris entre 60 et 90.

L'utilisation d'une telle émulsion a, en effet, pu permettre d'obtenir d'excellents résultats tant du point de vue de l'expansion (il a en effet été ainsi possible d'obtenir un taux d'expansion de 100 %), que du mouillage des granulats et de la cohésion du revêtement final.

L'invention se rapporte également à un procédé permettant d'obtenir un liant bitumineux du type susmentionné.

Selon l'invention, ce procédé est caractérisé en ce que l'on expanse une émulsion de bitume chauffée dans un dispositif de foisonnement en y insérant mécaniquement de l'air sous pression.

Comme il a déjà été indiqué, on cherche par ce procédé à obtenir un taux d'expansion de l'ordre de 100 %.

Pour mettre au point le dispositif de foisonnement, on a eu l'idée, conformément à l'invention, de se baser sur le mode de fonctionnement des aérateurs d'eau dont sont équipés la quasi totalité des robinets domestiques dans le but de diminuer le bruit ainsi que les éclaboussures lors du contact entre le fluide et un obstacle : de tels aérateurs, placés dans une gaine située à l'extrémité du robinet, sont schématiquement constitués par deux filtres délimitant entre-eux une chambre dans laquelle l'air peut pénétrer par des orifices répartis à la périphérie de l'aérateur. Le premier filtre comporte une plaque perforée permettant de séparer le flux d'eau en plusieurs jets ; la pression du fluide crée une aspiration d'air qui circule dans l'espace laissé entre la gaine et l'aérateur avant de pénétrer dans la chambre située entre les deux filtres ; le second filtre est, quant à lui, constitué par une série de plusieurs tamis généralement au nombre de quatre, qui, en cisaillant l'eau, permettent à l'air de s'y introduire.

Selon une autre caractéristique de l'invention, en aval de l'introduction d'air, on fait passer l'émulsion de bitume sur un filtre constitué par une série de grilles de tamisage afin de cisailler cette émulsion et de permettre à l'air de s'y introduire de façon à obtenir l'augmentation de volume recherchée.

Ce processus, bien que basé sur le mode de fonctionnement des aérateurs d'air susmentionnés, s'en distingue par la nécessité de chauffer l'émulsion de bitume avant son traitement, de préférence à une température de l'ordre de 60 à 80°C, et, par le fait que, pour obtenir un résultat satisfaisant au niveau de l'expansion, il est nécessaire que l'arrivée d'air soit forcée et réglable. Il est donc ainsi possible d'intervenir sur trois paramètres, à savoir la pression et la température de l'émulsion de bitume ainsi que la pression de l'air insufflé. Ce dernier paramètre a une influence toute particulière, étant donné que, si l'on augmente la pression de l'air insufflé, la vitesse d'écoulement de l'émulsion au niveau du filtre s'accroît et le choc avec les grilles de tamisage se fait plus violent et donc le cisaillement est amélioré et, par suite, également le taux d'expansion.

L'expérience a, cependant, prouvé que le résultat obtenu au niveau du foisonnement était avant tout dépendant du nombre et de la configuration des grilles de tamisage.

Conformément à l'invention, des résultats particulièrement satisfaisants ont été obtenus en utilisant des grilles ayant une maille de l'ordre de 0,2 à 0,4 mm.

Chacune de ces grilles de tanisage constitue une unité de cisaillement propre et, c'est le regroupement de celles-ci qui provoque le mélange air/émulsion et produit l'expansion du fluide. Le nombre de grilles devant être mises en oeuvre constitue cependant un paramètre très difficile à cerner étant donné que l'augmentation de ce nombre entraîne des pertes de charges qui doivent être compensées par un accroissement de la pression, ce qui améliore le taux d'expansion. Pour cette raison, il est particulièrement avantageux d'utiliser un dispositif de foisonnement permettant de faire varier le nombre de grilles de tamisage.

Selon une autre caractéristique de l'invention, en amont de l'introduction d'air, on fait passer l'émulsion de bitume sur un filtre auxiliaire comportant une plaque perforée de façon à la subdiviser préalablement en plusieurs jets.

Cette caractéristique, calquée sur les aérateurs d'air, permet d'améliorer le foisonnement en produisant un cisaillement préalable de l'émulsion de bitume, mais s'est, dans la pratique, révélée facultative.

Selon une autre caractéristique de l'invention, on introduit l'émulsion de bitume dans le dispositif de foisonnement par l'intermédiaire d'une pompe volumétrique à débit variable.

Cette pompe, coopère de façon préférentielle, avec une vanne réglable située à sa sortie, de manière à permettre de réguler le débit de l'émulsion dans le dispositif de foisonnement. Ce débit est, en fait, lié à la fois à la pression de l'air insufflé et à la pression de l'émulsion ; on a pu vérifier que sa régulation a une très grande influence sur le taux de cisaillement.

L'expérience a, en outre, démontré, conformément à l'invention, que la pompe doit obligatoirement coopérer avec un circuit de brassage de façon à éviter toute stagnation et toute rupture de l'émulsion à l'intérieur de celle-ci.

Par ailleurs, le montage doit être maintenu à une température de l'ordre de 60 à 80°C par un ruban chauffant de façon à empêcher les variations brutales de température sur l'émulsion et à faciliter la circulation de celle-ci dans les canalisations.

Les caractéristiques du liant bitumineux ainsi que du procédé qui font l'objet de l'invention seront décrites plus détail en se référant aux dessins annexés, dans lesquels :

– les figures 1a, 1b et 2 sont des schémas explicatifs des caractéristiques du liant bitumineux.

– la figure 3 représente un circuit permettant l'introduction de l'émulsion de bitume dans le dispositif de foisonnement,

– la figure 4 est une vue schématique partiellement coupée du dispositif de foisonnement.

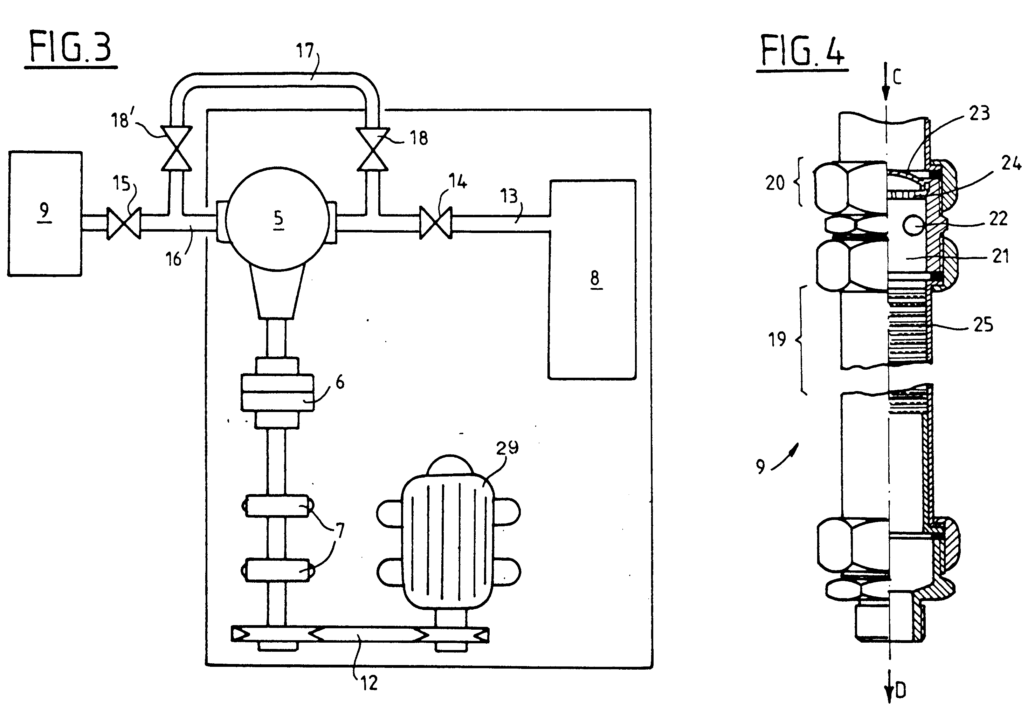

Selon la figure 3, une pompe volumétrique 5, dont les engrenages extérieurs 6 sont guidés par des paliers 7, permet de transférer l'émulsion de bitume d'un réservoir 8 à un dispositif de foisonnement 9 qui sera décrit plus en détail dans la suite de cet exposé.

La pompe 5 est actionnée par un moteur électrique triphasé 29 à vitesse de rotation constante, par l'intermédiaire d'un système poulies/courroies 12. Le débit de la pompe 5 peut être modifié à partir du diamètre de ces poulies.

La conduite 13 d'amenée de l'émulsion de bitume du réservoir 8 à la pompe 5 est munie d'une vanne de commande 14. Une vanne réglable 15 est, par ailleurs, prévue sur la canalisation de sortie 16 de la pompe allant vers le dispositif de foisonnement 9.

Un circuit de brassage 17, monté en dérivation de part et d'autre de la pompe 5, et muni de deux vannes 18, 18', permet d'éviter une stagnation puis une rupture de l'émulsion à l'intérieur de celle-ci.

Les canalisations 13, 16 et 17 sont munies d'un ruban chauffant non représenté permettant de maintenir la température de l'émulsion de bitume.

Selon la figure 4, l'émulsion de bitume sortant de la canalisation 16 entre dans le dispositif de foisonnement 9 selon la flèche C et en ressort à l'extrémité de celui-ci selon la flèche D. Ce dispositif 9 est schématiquement constitué par un filtre principal ou filtre aval 19 et par un filtre auxiliaire ou filtre amont 20 définissant entre-eux une chambre d'aération 21 munie d'orifices 22 par lesquels il est possible d'introduire de l'air sous pression.

Le filtre amont 20 est constitué par un tamis bombé 23 coopérant avec une plaque perforée 24 pour produire une répartition préalable en jets de l'émulsion introduite dans le dispositif selon la flèche C. Le filtre aval 19 est constitué par une série de grilles de tamisage 25 dont la maille est de l'ordre de 0,2 à 0,4, et dont le nombre et la répartition sont choisis de manière à obtenir, à la sortie du dispositif, une crème de bitume ayant les caractéristiques recherchées.

Un gicleur non représenté peut, le cas échéant, être ajouté à ce dispositif.

**Revendications**

1°) Liant bitumineux pour revêtement de chaussées, notamment pour la fabrication d'enduits superficiels ou d'enrobés destinés à former les couches de base ou la couche de roulement d'une chaussée, caractérisé en ce qu'il est constitué par une émulsion de bitume expansée à l'air susceptible d'être mise en oeuvre à une température de l'ordre de 60 à 80°C.

2°) Liant bitumineux selon la revendication 1, caractérisé en ce que le taux d'expansion est de l'ordre de 100 % en volume.

3°) Liant bitumineux selon l'une quelconque des revendications 1 et 2, caractérisé en ce que l'émulsion de bitume présente une teneur en eau environ comprise entre 25 et 40 %, une viscosité à 25°C de l'ordre de 10 à 50, exprimée en degrés ENGLER, et un indice de rupture compris entre 60 et 90.

4°) Procédé d'obtention d'un liant bitumineux selon l'une quelconque des revendications 1 à 3, caractérisé en ce que l'on expanse une émulsion de bitume chauffée dans un dispositif de foisonnement en y insérant mécaniquement de l'air sous pression.

5°) Procédé selon la revendication 4, caractérisé en ce que, en aval de l'introduction d'air (22), on fait passer l'émulsion de bitume sur un filtre (19) constitué par une série de grilles de tamisage (25) afin de cisailler cette émulsion et de permettre à l'air de s'y introduire de façon à obtenir l'augmentation de volume recherchée.

6°) Procédé selon la revendication 5, caractérisé en ce que chaque grille de tamisage (25) a une maille de l'ordre de 0,2 à 0,4 mm.

7°) Procédé selon l'une quelconque des revendications 5 et 6, caractérisé en ce que, en amont de l'introduction d'air, on fait passer l'émulsion de bitume sur un filtre auxiliaire (20) comportant une plaque perforée (24) de façon à la subdiviser préalablement en plusieurs jets.

8°) Procédé selon l'une quelconque des revendications 4 à 7, caractérisé en ce que l'on introduit l'émulsion de bitume dans le dispositif de foisonnement (9) par l'intermédiaire d'une pompe volumétrique (5) à débit variable.

9°) Procédé selon la revendication 8, caractérisé en ce que la pompe (5) coopère avec un circuit de brassage (17) de façon à éviter toute stagnation et toute rupture de l'émulsion à l'intérieur de celle-ci.

FIG.1a

FIG.1b

FIG.2

FIG.3

FIG.4

EP 0 466 526 A1

**Office européen des brevets**

# RAPPORT DE RECHERCHE EUROPEENNE

Numero de la demande

EP    91 40 1280

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | TRAVAUX<br>vol. 86, mars 1987,<br>pages 16 - 23;<br>"PRIX DE L'INNOVATION 1986"<br>* page 19, ligne 1 - page 23, colonne 1; figures 9, 10, 14-16 * | 1 | C08J9/30<br>E01C19/17<br>E01C7/18<br>E01C19/45 |
| Y | | 1-10 | |
| Y | EP-A-283399 (ENTREPRISE JEAN LEFEBVRE)<br>* page 6; revendications 1-11; figure 1 * | 1-10 | |
| Y | US-A-2312639 (GRONEMEYER)<br>* page 2, colonne 1, ligne 63 - page 2, colonne 1, ligne 71; revendications 11-5; figures 2, 4 * | 1-10 | |
| A | FR-A-937976 (PYRENE DEVELOPPEMENT CORP.)<br>* page 5, ligne 74 - page 6, ligne 78; revendications I-II; figure 4 * | 1-10 | |
| A | US-A-4863643 (COCHRAN)<br>* revendications 1-3; figure 1 * | 1-10 | |
| A | US-A-2597913 (WEBSTER)<br>* revendications 1, 2; figures 1-6 * | 1-10 | DOMAINES TECHNIQUES RECHERCHES (Int. Cl.5)<br><br>C08J<br>B01F |
| A | GB-A-1468249 (WARWICK PUMP & ENGINEERINNG COMPANY LTD.)<br>* page 2, ligne 27 - page 2, ligne 42; revendications 1, 4, 9, 10; figure 1 * | 1-10 | B05B<br>E01C |

Le présent rapport a été établi pour toutes les revendications

| Lieu de la recherche | Date d'achèvement de la recherche | Examinateur |
|---|---|---|
| LA HAYE | 31 JUILLET 1991 | OUDOT R. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................
& : membre de la même famille, document correspondant

EPO FORM 1503 03.82 (P0402)